Europäisches Patentamt

European Patent Office

Office européen des brevets

(11) Publication number: **0 246 730**
**A2**

# EUROPEAN PATENT APPLICATION

(21) Application number: 87301916.0

(22) Date of filing: 05.03.87

(51) Int. Cl.⁴: **B60T 8/18**

(30) Priority: 24.04.86 GB 8609989

(43) Date of publication of application:
25.11.87 Bulletin 87/48

(84) Designated Contracting States:
CH DE FR IT LI

(71) Applicant: WESTINGHOUSE BRAKE AND
SIGNAL COMPANY LIMITED
Pew Hill
Chippenham Wiltshire(GB)

(72) Inventor: Washbourn, Jack
9 Boundary Close
Bradenstoke Chippenham Wiltshire(GB)

(74) Representative: Page, Edmund John et al
Temple Gate House Temple Gate
Bristol BS1 6PL(GB)

(54) **Variable load braking systems.**

(57) A variable load braking system comprising means (graduable release distributor) for generating a first fluid-pressure signal indicative of the required degree of braking, a source of fluid pressure (auxiliary reservoir), a fluid pressure brake cylinder (brake cylinder), means for generating a second fluid-pressure signal indicative of the load to be braked (variable load control valve), first valve means (3) to which, in operation, is applied the first fluid-pressure signal to effect operation of the first valve means (3) to connect the source of fluid pressure (auxiliary reservoir) to the brake cylinder, second valve means (4) operatively controlled by balancing of the second fluid-pressure signal against the first fluid-pressure signal to produce a third fluid-pressure signal which is applied to the first valve means (3) and is therein balanced against the first fluid-pressure signal to operate the first valve means (3) to control the output pressure of the first valve means in accordance with the relative valves of the first and third fluid pressure signals, said output pressure being applied over the connection to the brake cylinder to effect the required degree of braking.

FIG.4

## Variable Load Braking Systems

This invention relates to variable load braking systems.

Such systems are, of themselves, well known and provide a system in which the required degree of braking is ensured irrespective of the load being braked. Systems of this type are used, for example, in railway braking systems. Valves for these systems are, however, relatively complicated and, therefore expensive.

As an alternative to variable load braking systems there are the equally well-known so-called empty/load braking systems. In these types of systems, the degree of braking effected relative to the required degree of braking is dependent upon whether the load being braked is above or below a certain predetermined value. For vehicles such as railway wagons, the predetermined value is set for a little above the empty weight of the wagon so that a first lower degree of braking is effected for any called-for degree of braking if the wagon is empty and, therefore, only the tare weight of the wagon has to be braked and a second higher degree of braking is effected if it is the loaded weight of the wagon which has to be braked. These systems are far simpler and, therefore, cheaper than variable-load braking systems.

Recognising the cost benefits of the empty/load braking system, the present invention provides a variable-load braking system based on modification of the empty/load braking system.

Accordingly, the present invention provides a variable load braking system comprising means for generating a first fluid-pressure signal indicative of the required degree of braking, a source of fluid pressure, a fluid pressure brake cylinder, means for generating a second fluid-pressure signal indicative of the load to be braked, first valve means to which, in operation, is applied the first fluid pressure signal to effect operation of the first valve means to connect the source of fluid pressure to the brake cylinder, second valve means operatively controlled by balancing of the second fluid-pressure signal against the first fluid-pressure signal to produce a third fluid-pressure signal which is applied to the first valve means and is therein balanced against the first fluid-pressure signal to operate the first valve means to control the output pressure of the first valve means in accordance with the relative valves of the first and third fluid pressure signals, said output pressure being applied over the connection to the brake cylinder to effect the required degree of braking.

Conveniently, the means for generating the first fluid-pressure signal is a graduable release distributor and may include a dummy cylinder.

The first valve means may comprise a first pressure-responsive member to one side of which, in operation, is applied the first fluid-pressure signal and to the other side of which is applied the output pressure, a second pressure-responsive member to one side of which, in operation, is applied the third fluid-pressure signal, and a valve the operation of which is controlled by the two pressure-responsive members to determine the value of the output pressure.

The second valve means may comprise a first pressure-responsive member to one side of which, in operation, is applied the second fluid-pressure signal, a second fluid-pressure responsive member to one side of which, in operation, is applied the first fluid-pressure signal, and a valve the operation of which is controlled by the two pressure-responsive members of this second valve to determine the value of the third fluid-pressure signal. In this arrangement, a spring force may be exerted on the other side of the second pressure-responsive member of the second valve means.

The third fluid-pressure signal may be derived by the operation of the valve of the second valve means from the first fluid-pressure signal. There may then be provided a check valve between the path of the first fluid-pressure signal and the path of the second fluid-pressure signal, the check valve being in a path in parallel the valve of the second valve means and being arranged so as to allow flow of fluid only in the direction between the path of the third fluid-pressure signal and the path of the first fluid-pressure signal.

One embodiment of the present invention will now be described in greater detail, by way of example only, with refernce to the accompanying drawings of which:-

Fig. 1 shows a graph of the degree of braking effected by a conventional variable-load braking system,

Fig. 2 shows a graph of the degree of braking effected by a conventional empty/load braking system,

Fig. 3 shows a schematic representation of a conventional empty/load braking system,

Fig. 4 shows a schematic representation of a modification of the system of Fig. 3 embodying the present invention, and

Fig. 5 shows a graph of the degree of braking effected with the system of Fig. 4.

Whilst, in the following description, the invention is described with reference to railway vehicle braking systems, it will be appreciated that the invention is equally applicable to other braking systems such as, for example, mine winding cage systems or crane systems.

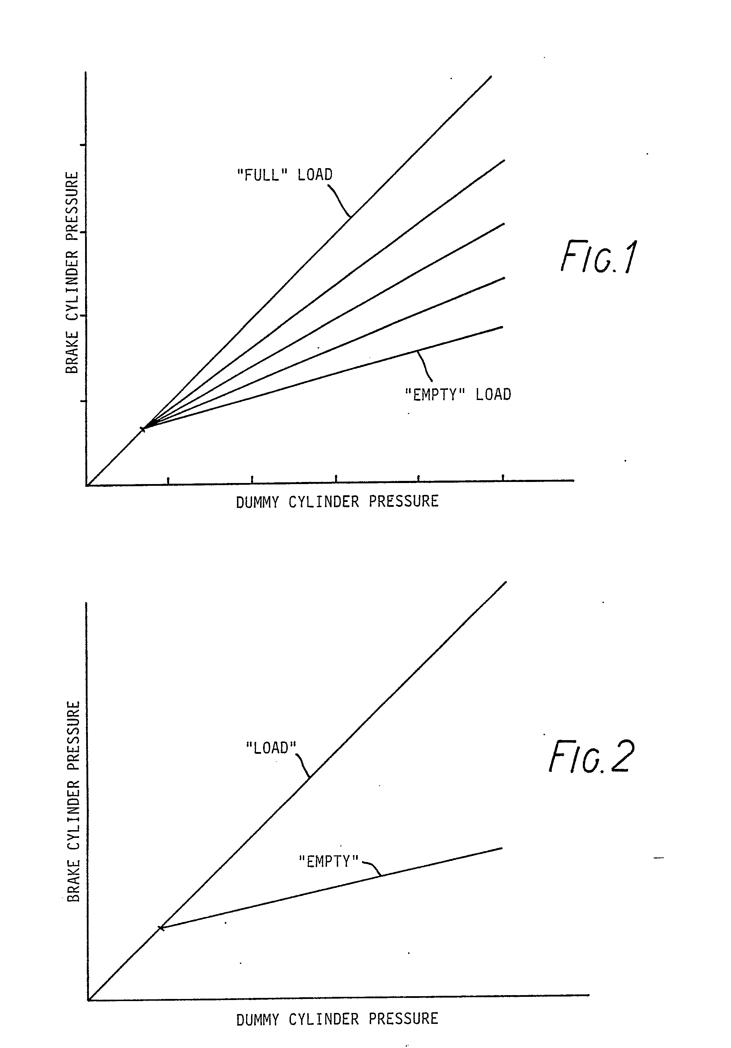

In the graphs of all of Figs. 1, 2 and 5, there is plotted the "Brake Cylinder Pressure" (and, therefore, the degree of braking effected) against "Dummy Cylinder Pressure" (i.e. the required degree of braking).

It can be seen from Fig. 1 that, with a conventional variable-load braking system, the braking curves all initially follow the "Full" load braking curve. This is to ensure that there is sufficient brake cylinder pressure to move the brake blocks onto the wheels. Thereafter, the degree of braking effected follows one of the curves depending upon the actual load of the vehicle, the various alternative curves lying between the "Empty" load curve and the "Full" load curve.

In the conventional empty/load braking system, there are only the two possible curves - one for loaded condition of the vehicle and the other for its empty condition albeit that, as for a variable-load system and for the same reason, the two curves have an identical initial phase.

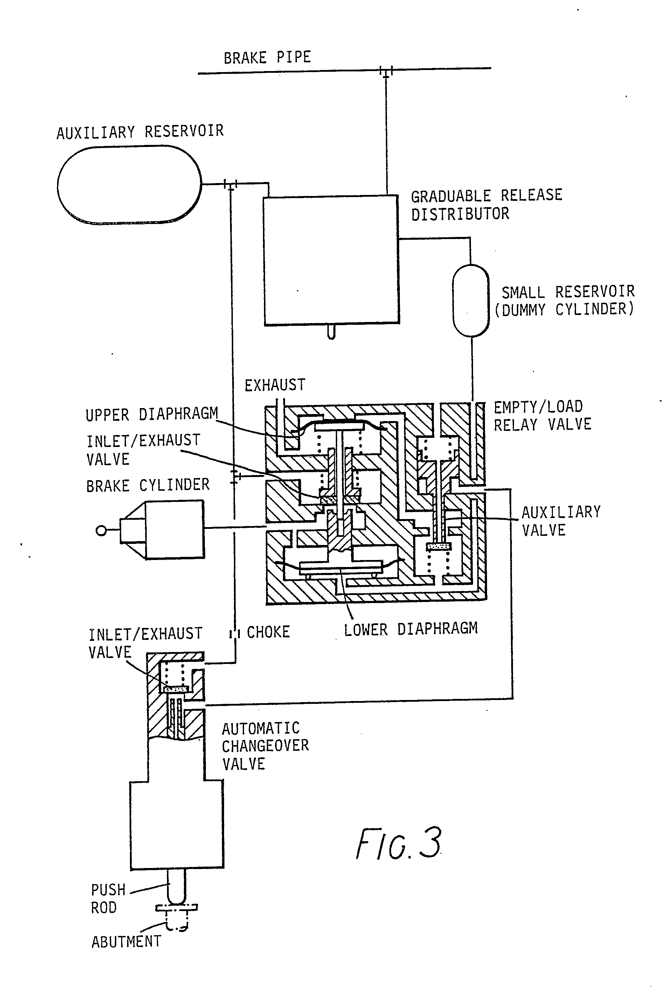

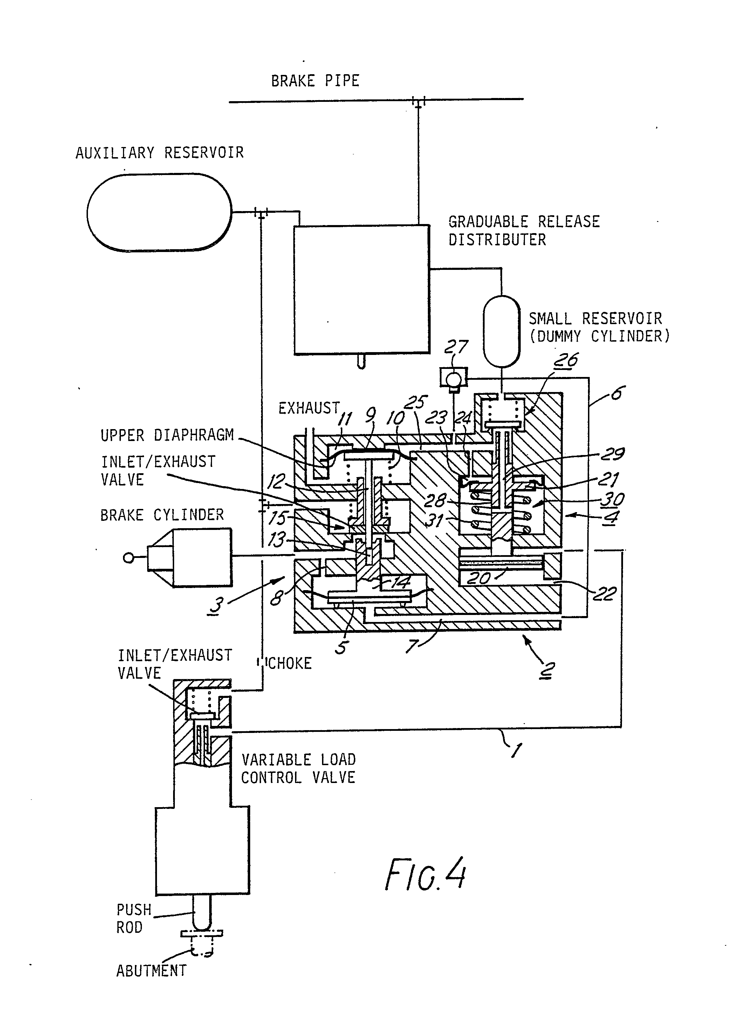

Fig. 3 illustrates a convention well-known empty/oad braking system. The system is shown in its "empty" state. Being well-known, with the legends on the drawing, the operation of this system should be comprehensible and here require no further explanation other than that given below with reference to Fig. 4.

Referring now to Fig. 4, there is here illustrated modification of the empty/load system of Fig. 3 to convert it into a variable-load system.

In this modified system, the means for generating a first fluid-pressure signal indicative of the required degree of braking is identical to that of Fig. 3 and comprises a fluid-pressure source (the Auxiliary Reservoir), a Brake Pipe which inputs into a Graduable Release Distributor the output of which is fed to a Dummy Cylinder; the pressure generated in the Dummy Cylinder being said first fluid-pressure signal.

The Automatic Changeover Valve of Fig. 3 is replaced by a Variable Load Control Valve of known construction. This Valve is fed from the Auxiliary Reservoir via a Choke and the output of the Valve, the pressure of which varies with the load of the vehicle, is fed ove line 1.

The Empty/Load Relay Valve of Fig. 3 is replaced by a valve block 2 in Fig. 4. This valve block 2 includes first valve means 3 and second valve means 4.

The first valve means 3 is on all essential constructional features identical to the left-hand valve means of the Empty/Load Relay Valve of Fig. 3. These first valve means 3 comprises a first pressure-responsive member (diaphragm 5) to the lower side of which is applied the first fluid-pressure signal from the Dummy Cylinder over line 6 and passage 7 in the valve block 4. To the other (upper) side of the diaphragm 5 is applied through port 8 the output pressure applied to the Brake Cylinder. The valve means 3 includes a second pressure-responsive member (diaphragm 9) loaded on its lower side by a spring 10 and subject on its upper side to any fluid pressure in chamber 11. The two diaphragms 5 and 9 are loosely interconnected by a stem 12 carried by the diaphragm 9, the lower end of the stem 12 extending into a bore 13 of the stem 14 carried by the diaphragm 5. Between the two diaphragms 5 and 9 is located a valve 15 which controls the feeding of fluid pressure from the Auxiliary Reservoir to the Brake Cylinder.

The second valve means 4 comprises first and second pressure-responsive members, diaphragms 20 and 21 respectively. Over the line 1, the second fluid pressure signal is fed to above the diaphragm 20, the lower side of this diaphragm being open to atmosphere through port 22. The chamber 23 above the diaphragm 21 is connected via passages 24 and 25 to below a valve 26 located between the Dummy Cylinder and the passage 25. The passage 25, when the valve 26 is open, thus provides a path for the first fluid-pressure signal from the Dummy Cylinder to the chamber 11 of the first valve means 3. In parallel with this path is a second path for this first signal, via a check valve 27 operational to allow flow of fluid only in the direction from the passage 25 to the Dummy Cylinder. The two diaphragms 20 and 21 are connected togehter by a common stem 28 through which extends a bore 29 interconnecting the underside of valve 26 with the chamber 30 below the diaphragm 21 which houses a spring 31 operative upwardly on the diaphragm 21.

The system of Fig. 4 operates in the following manner.

In the event of a desired brake application, the pressure in the Brake Pipe is reduced by an amount corresponding to the desired degree of braking. Such drop of pressure causes the Graduable Release Distributor to generate in the Dummy Cylinder from the pressure source of the Auxiliary Reservoir, a first fluid-pressure signal which is equally indicative of the required degree of braking. This signal, over line 6 and passage 7 is applied to below the diaphragm 5 of the first valve means 3. Such application of the signal causes the diaphragm 5 to be lifted and, thereby, open valve 15. Opening of valve 15 causes fluid pressure derived from the Auxiliary Reservoir to be fed to the Brake Cylinder and, thus, for the brakes to be applied.

In an "empty" condition of the vehicle, the Variable Load Control Valve will deliver, over line 1 to above the diaphragm 20 of the second valve means 4, a zero fluid-pressure signal. Thus, the spring 31 will be fully effective on the diaphragm 21 to hold open the valve 26. The first fluid-pressure signal from the Dummy Cylinder will thus be passed unchanged as the third fluid-pressure signal into the chamber 11 on the top of the diaphragm 9 of the first valve means 3. This will force the diaphragm 9 downwardly against the return spring 10 to engage bottom the stem 12 in the bore 13 of stem 14. As a result, the force generated on the diaphragm 9 by the third fluid pressure signal will oppose that generated on the diaphragm 5 by the first fluid-pressure signal. Hence, the output pressure from valve 15 applied to the brake cylinder will be at a lower value.

If, however, the vehicle had been "fully loaded", the Variable Load Control Valve would have delivered an output pressure indicative of this condition which, as the second fluid-pressure signal, would have been applied to above the diaphragm 20. Thus, in this case, the spring 31 would have been overcome, the valve 26 closed, and a "nil" third fluid-pressure signal applied to chamber 11 above diaphragm 9. Hence, there would now have been no downwardly-directed force to oppose the upwardly-directed force generated by the application of the first fluid-pressure signal to the diaphragm 5. In turn, this would result in the output pressure from valve 15 applied to the brake cylinder being at a higher value.

Similarly, for any intermediate degree of loading of the vehicle, the second fluid-pressure signal delivered by the Variable Load Control Valve would have had an intermediate value indicative of that degree of loading. Thus, spring 31 would have been only partially balanced with a resultant reduced upwardly-directed force on diaphragm 21 which would be balanced by some correspondingly intermediate value of the third fluid-pressure signal. The application of this third signal to the diaphragm 9 would then have generated on the diaphragm 9 an intermediate value of downwardly-directed force and, thus, the output pressure from valve 15 would have had a corresponding intermediate value.

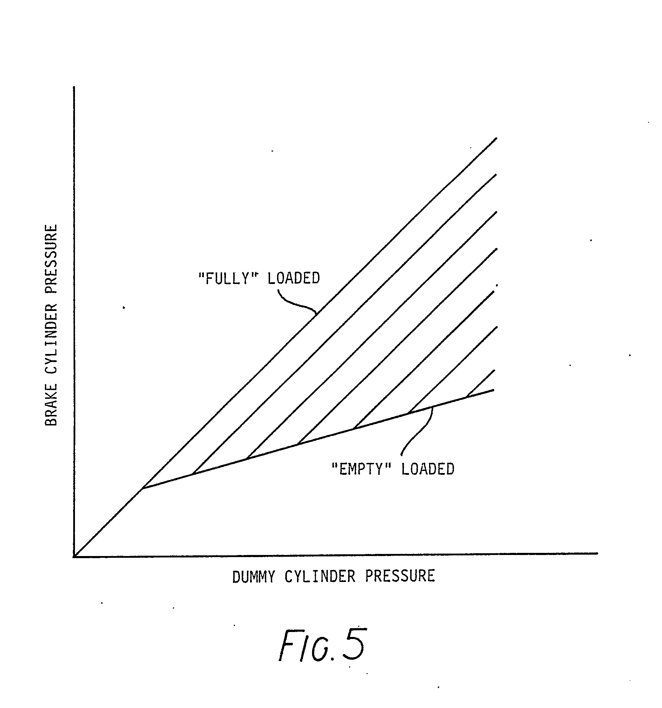

A graph showning the alternative curves achievable with the system if Fig. 4 is shown in Fig. 5. It will be seen from Fig. 5, that the curves approach those of Fig. 1 thus giving a variable-load braking system.

Check valve 27 is incorporated to allow exhaustion of the various volumes connected to passage 25 during brake release.

In the embodiment of Fig. 4, the diaphragm 5 is such as to give a 1:1 ratio between the "fully loaded" value of the second fluid-pressure signal and the output pressure of valve 15. This ratio can, however, be chosen to have any desired value.

## Claims

1. A variable load braking system comprising means (graduable release distributor) for generating a first fluid-pressure signal indicative of the required degree of braking, a source of fluid pressure (auxiliary reservoir), a fluid pressure brake cylinder (brake cylinder), means for generating a second fluid-pressure signal indicative of the load to be braked (variable load control valve), first valve means (3) to which, in operation, is applied the first fluid-pressure signal to effect operation of the first valve means (3) to connect the source of fluid pressure (auxiliary reservoir) to the brake cylinder, second valve means (4) operatively controlled by balancing of the second fluid-pressure signal against the first fluid-pressure signal to produce a third fluid-pressure signal which is applied to the first valve means (3) and is therein balanced against the first fluid-pressure signal to operate the first valve means (3) to control the output pressure of the first valve means in accordance with the relative valves of the first and third fluid pressure signals, said output pressure being applied over the connection to the brake cylinder to effect the required degree of braking.

2. A braking system as claimed in Claim 1, wherein the means for generating the first fluid-pressure signal is a graduable release distributor.

3. A braking system as claimed in either Claim 1 or Claim 2, wherein the means for generating the first fluid-pressure signal includes a dummy cylinder (small reservoir).

4. A braking system as claimed in any one of the preceding Claims, wherein the first valve means (3) comprises a first pressure-responsive member (5) to one side of which, in operation, is applied the first fluid-pressure signal and to the other side of which is applied the output pressure, a second pressure-responsive member (9) to one side of which, in operation, is applied the third fluid-pressure signal, and a valve (15) the operation of which is controlled by the two pressure-responsive members (5/9) to determine the value of the output pressure.

5. A braking system as claimed in any one of the preceding Claims, wherein the second valve means (4) comprises a first pressure-responsive member (20) to one side of which, in operation, is applied the second fluid-pressure signal, a second fluid-pressure responsive member (21) to one side of which, in operation, is applied the first fluid-pressure signal, and a valve (26) the operation of which is controlled by the two pressure-responsive members (20/21) of this second valve (26) to determine the value of the third fluid-pressure signal.

6. A braking system as claimed in Claim 5, wherein a spring force (31) is exerted on the other side of the second pressure-responsive member (21) of the second valve means (4).

7. A braking system as claimed in any one of the preceding Claims, wherein the third fluid-pressure signal is derived by the operation of the valve (26) of the second valve means (4) from the first fluid-pressure signal.

8. A braking system as claimed in Claim 7, wherein there is provided a check valve (27) between the path of the first fluid-pressure signal and the path of the second fluid-pressure signal, the check valve (27) being in a path in parallel the valve (26) of the second valve means (4) and being arranged so as to allow flow of fluid only in the direction between the path of the third fluid-pressure signal and the path of the first fluid-pressure signal.

9. A braking system as claimed in any one of the preceding Claims, wherein the system is a braking system for a railway vehicle.

FIG.1

BRAKE CYLINDER PRESSURE

"FULL" LOAD

"EMPTY" LOAD

DUMMY CYLINDER PRESSURE

FIG.2

BRAKE CYLINDER PRESSURE

"LOAD"

"EMPTY"

DUMMY CYLINDER PRESSURE

BRAKE PIPE

AUXILIARY RESERVOIR

GRADUABLE RELEASE DISTRIBUTOR

SMALL RESERVOIR (DUMMY CYLINDER)

EXHAUST

UPPER DIAPHRAGM

INLET/EXHAUST VALVE

BRAKE CYLINDER

EMPTY/LOAD RELAY VALVE

AUXILIARY VALVE

INLET/EXHAUST VALVE

CHOKE

LOWER DIAPHRAGM

AUTOMATIC CHANGEOVER VALVE

FIG.3

PUSH ROD

ABUTMENT

BRAKE PIPE

AUXILIARY RESERVOIR

GRADUABLE RELEASE
DISTRIBUTER

SMALL RESERVOIR
(DUMMY CYLINDER)

EXHAUST

UPPER DIAPHRAGM

INLET/EXHAUST
VALVE

BRAKE CYLINDER

INLET/EXHAUST
VALVE

CHOKE

VARIABLE LOAD
CONTROL VALVE

PUSH
ROD

ABUTMENT

FIG.4

FIG.5